Europäisches Patentamt

European Patent Office

Office européen des brevets

(11) Publication number : **0 200 774**
**B1**

(12) **EUROPEAN PATENT SPECIFICATION**

(45) Date of publication of patent specification :
14.02.90

(21) Application number : 85905789.5

(22) Date of filing : 04.10.85

(86) International application number :
PCT/EP 85/00519

(87) International publication number :
WO/8602012 (10.04.86 Gazette 86/08)

(51) Int. Cl.⁵ : **A 63 C   9/085**

(54) FRONTPIECE FOR SAFETY SKIBINDING.

(30) Priority : 05.10.84 DE 3436672

(43) Date of publication of application :
12.11.86 Bulletin 86/46

(45) Publication of the grant of the patent :
14.02.90 Bulletin 90/07

(84) Designated contracting states :
AT FR

(56) References cited :
DE--A-- 2 030 749
DE--A-- 2 905 837
FR--A-- 2 147 358
FR--A-- 2 173 049
FR--A-- 2 523 857

(73) Proprietor : **Marker Deutschland GmbH**
**Hauptstrasse 51**
**D-8100 Garmisch-Partenkirchen (DE)**

(72) Inventor : **Hörnschemeyer, Heinz**
**Herrnpoint 42**
**D-8103 Oberammergau (DE)**
Inventor : **Emert, Anton**
**Hauptstrasse 6**
**D-8106 Oberau (DE)**

(74) Representative : **Wagner, Karl H. et al**
**WAGNER & GEYER Patentanwäite Gewürzmühls-**
**trasse 5 Postfach 246**
**D-8000 München 22 (DE)**

## Description

The present invention relates to a front-piece for safety ski-bindings.

Front pieces or toe pieces for safety ski bindings composed of a single, centrally located member or a pair of symmetrically mounted members, in either case being mounted to pivot sideways against a spring force in response to side forces on a boot held in the binding are known. It is also known to provide such bindings with a control mechanism which is actuated by a pedal for maintaining the release resistance generally constant regardless of variations in the forces applied to the pedal. Such front pieces are known, for example, from DE-A-2 030 749 and DE-A-2 905 837. The front-piece disclosed in the DE-A-2 030 749 comprises a sole-holder which is held in its normal position by means of a detent device. In this known detent device, a detent resistance is provided which acts against a sideways pivotal movement of the sole-holder, which resistance is reduced if the body of the skier is shifted forwardly so as to balance the friction between the ski boot and the ski surface (or a slide plate), i. e. a friction which opposes the sideways movement of the sole holder. Control means are used which control the detent engagement of a detent member in a detent indentation depending on the pressure of the ski boot onto a pedal in the area of the ball of the boot such that for increasing pressure at the ball of the boot, the detent engagement is reduced and the spring force acting on the detent member is decreased, respectively. Therefore, the resistance of the detent means is reduced by approximately the amount of the frictional resistance. These control means are quite complicated and subject to malfunction, and they are generally subject to a large amount of wear, inasmuch as they act against the detent spring. For that reason, such known front pieces are not used on bindings in the market.

DE-A-2 905 837 discloses a front-piece providing for an extended movement. Such a binding is without a detent means and automatically returns into its operating position after the tip of the ski boot has been released. For that front piece provision is made that an auxiliary force is generated by means of the pressure of the ball of the foot which acts via a control means. This auxiliary force offsets the release force, so as to balance the occurring friction. The auxiliary force acts upon the effective end of the spring in a sense such that the sole holder (s) is (are) relieved. In any event, the auxiliary force has to be smaller than the bias of the spring which has to be overcome for purposes of release. This has as a consequence that for these known designs the movable parts and the bearing parts of the control means are subject to a great amount of wear. For that reason front-pieces of the foregoing type have not been introduced into the market.

It is an object of the present invention to provide an improved front-piece for a safety ski binding having a release resistance to side forces which remains generally constant regardless of variations in forces applied at the ball of the foot to the front piece.

It is another object to provide such a front piece with movable parts which are not subject to an excessive degree of wear.

A further object is the provision of such a front piece for a ski binding wherein compensation of the frictional forces is obtained with only a few new elements and materials, so that the front piece cannot only be manufactured in a simpler and less expensive way, but is also less prone to malfunction.

In accordance with the invention a front piece as set forth in the preamble of claim 1 is provided with the features of the characterizing clause. Preferred embodiments are disclosed in the dependent claims. Due to the pressure depending decrease of the length of the lever arm an automatic reduction of the release resistance is caused, the release resistance being due to the force transmitted by the lever arm, i. e. the transmitted moment. As a result of the design of the preferred forms of the invention the entire or total release resistance which includes the frictional resistance is kept at least approximately constant. In contrast to the prior art, the force of the release spring is not influenced by the control means. This has the consequence that the control means can be designed and built in a light and simple manner.

Other objects and advantages of the invention will become apparent upon reading the following detailed description and upon reference to the drawings, in which :

Figure 1 is a central longitudinal cross-sectional view of the front-piece of a first embodiment of the invention, with the mounting of the spring not being shown as a cross-sectional view ;

Figure 2 is a partially cut plan view of the front-piece of Figure 1 ;

Figure 3 is a front-piece according to a second embodiment in a partially cut side view ;

Figure 4 is a plan view of a front-piece of another embodiment ;

Figure 5 is a central longitudinal sectional view of the front-piece of Figure 4 ;

Figure 6 is a sectional view along line VI-VI in Figure 5 ;

Figure 7 is a plan view seen from arrow 7 in Figure 5 ; and,

Figures 8 and 9 are representations similar to Figures 6 and 7 in a situation where the control means are actuated.

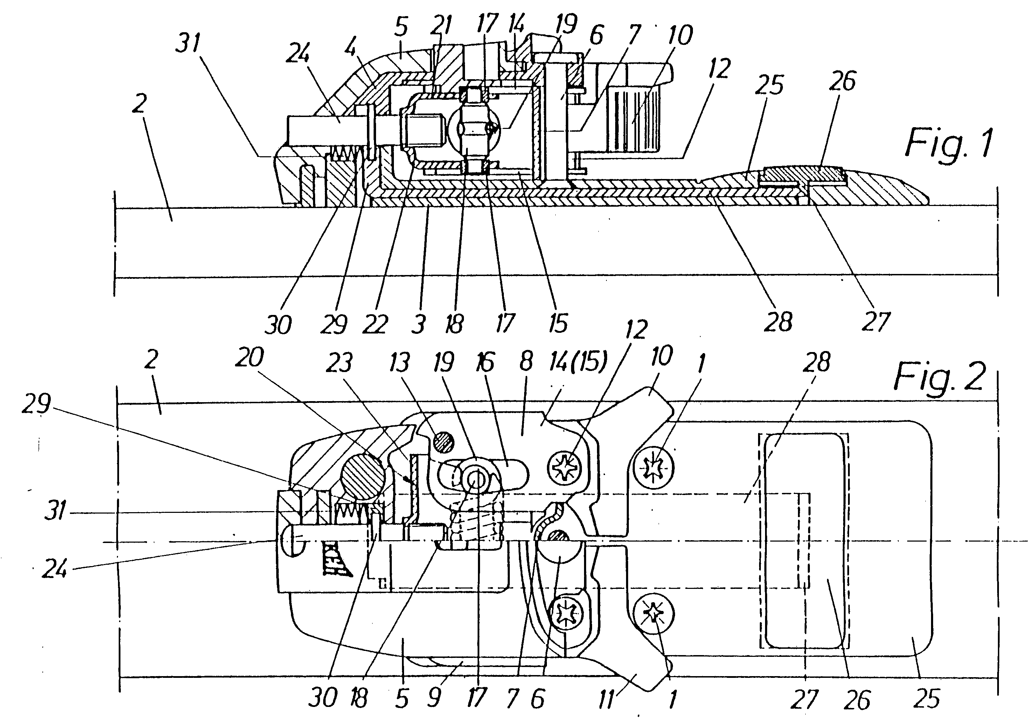

The front-piece shown in Figures 1 and 2 comprises a housing mounted on a ski 2 by means of screws 1. The housing comprises an upper portion 4, a bottom portion 3 and a cover cap 5 with all said elements being fixedly mounted together. With regard to Figure 1 the housing has in substance the form of a U. The legs of the U are connected to each other by means of a centrally located rivet 6. In the area of this riveting a separating member 7 is provided between those legs. The separating member 7 serves with its two side-edges as an abutment for a pair of pivot levers 8 and 9, respectively. The pivot levers 8 and 9, respectively, form supporting members for two sole-holders 10 and 11. Each of sole-holders 10, 11 is connected with its supporting member by means of a vertically arranged screw 12. Each of sole-holders 10, 11 is screwed onto its screw 12. It should be noted, however, that screw 12 is supported in the supporting member in a rotatable but axially immovable manner. Each of pivot levers 8, 9 is pivotally mounted on an axis forming bolt 13. Bolts 13 are arranged between the legs of the housing and extend parallel to rivet 6. In Figure 2 only bolt 13 for pivot lever 8 is shown. The second bolt which is arranged symmetrically with respect to the first-mentioned bolt cannot be seen in Figure 2 because it is covered by cover cap 5.

The pivot levers and sole-holder support members 8, 9, respectively, are formed as sheet metal parts of substantially U-shape. The legs 14, 15 extend parallel to the ski surface towards the longitudinal axis of the front piece (see Figure 2). Each of legs 14, 15 comprises an elongated hole 16 in alignment with each other. In each one of elongated holes 16 a guide roller 17 is guided, guide roller 17 being rotatably mounted on the same axle 18. Between the two guide rollers 17 of each pivot lever 8, 9 the hook-shaped end of a pulling spring 19 is mounted on each of the axles. Pulling spring 19 will normally maintain the pivot levers 8, 9 in abutment with separating member 7. The guide-rollers 17, besides being guided in elongated holes 16, are also guided in a guide or supporting member 20. Member 20 is also a substantially U-shaped sheet metal member having legs 21, 22 which extend parallel to the legs of the pivot levers 8, 9 and in-between the legs of said pivot levers 8, 9 (see Figure 1).

The side faces of legs 21, 22 are recessed. These recesses do receive the guide rollers 17 in the normal position of the pivot levers 8, 9. A web 23 of member 20 is provided with a threaded hole into which the shaft of a screw 24 is threaded. Screw 24 holds member 20 in the housing. The front-piece described so far is known from the prior art so that an even more detailed description is not necessary. Regarding the structure and the function, reference is made for example to DE-A-2 034 355.

The bottom portion 3 of the housing is extended at its one part which forms one of the U-legs. The extension of this one part goes beyond the connecting rivet 6 and forms a stepping plate 25 in which a pedal 26 is vertically movable in a limited manner. This pedal forms part of a control means of the preferred forms of the invention. The control means serves to keep the release resistance at least substantially constant, regardless of the variable pressure applied to pedal 26.

Pedal 26 is provided at its bottom side with a push wedge 27 for the actuation of a slide element 28. The slide element 28 is movably mounted in longitudinal direction in the leg of the bottom portion of the housing. The slide element 28 has, as shown in the figure, at its left end a vertically extending angle portion 29. The angle portion 29 comprises a recess for fittingly receiving a collar 30 which is provided on the screw 24. Also acting on the angle portion 29 is a reset spring 31 which is supported in the housing. The reset spring 31 maintains the slide element 28 and consequently also the pedal 26 in their respective normal positions. In the event that a ski boot presses the pedal downwards due to increased load on the ball of the foot, then this has the consequence of moving the slide element 28 and, consequently, the screw 24. Inasmuch as the guide and supporting member 20 is screwed to the screw 24 member 20 as well as the spring 19 supported by member 20 are moved. As a consequence, the length of the force arm by means of which the spring 19 acts upon the support members 8, 9 is shortened, with support members 8, 9 being supported by axis-forming bolts 13. As a result, the release resistance of the spring is reduced and therefore the frictional resistance is compensated for the respective large load of the ball of the foot, so that the entire release resistance with respect to the sideward release of the ski boot is at least approximately kept constant.

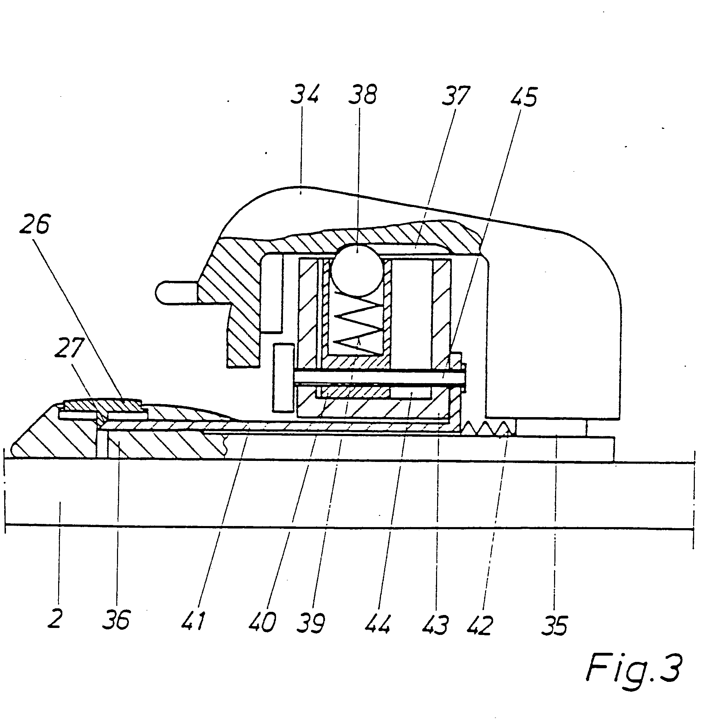

The front piece of Figure 3 is provided with a centrally located sole holder 34, sole holder 34 being pivotally mounted on a vertical axis 35. The axis 35 is, as is customary, riveted to a base plate 36, a base plate which is in turn screwed to the ski 2. By means of a detent device the sole holder is locked in its normal position. This detent device comprises a detent groove 37, a detent ball 38 and a detent spring 39 acting upon ball 38. The detent groove is located in the sole holder, while the detent ball 38 is arranged together with the detent spring 39 in a spring cage 40. The spring cage 40 is mounted to the base plate 36 in a manner described below.

As was described in connection with the front piece shown in Figures 1 and 2, the present front piece is also provided with a pedal 26, a pedal which is movably mounted in the base plate 36 in a vertically limited manner. The push wedge 27 at the bottom side of the pedal acts also in the present case together with a slide element 41, a slide element which is movably mounted in longitudinal direction in base plate 36. The slide element 41 is again under the influence of a reset spring 42, which is supported at axis 35. The slide element 41 carried a support 43, said support 43 comprises a longitudinal recess 44 adapted to receive the spring cage 40. A screw 45 is rotatably but not axially movably supported in support 43. Spring cage 40 is screwed to the shaft of screw 45. By means of actuation of screw 45 the position of spring cage 40 in longitudinal recess 44 of support 43 may be changed at will, and consequently also the release resistance of the detent

EP 0 200 774 B1

spring 39.

Similarly to the operation of the first-mentioned embodiment, it is also true for this embodiment that an increasing load of the ball of the foot moves the pedal 26 downwardly, a downward movement which causes the movement of slide element 41 towards the right (see Figure 3). Due to this movement the distance between the detent ball 38 and the pivot axis 35 is shortened which causes an automatic reduction of the release resistance of the detent spring 39. Therefore, in accordance with this embodiment of the invention, the frictional resistance occurring during the sideways release is correspondingly compensated for high ball-of-foot loads, and the total release resistance is maintained approximately constant.

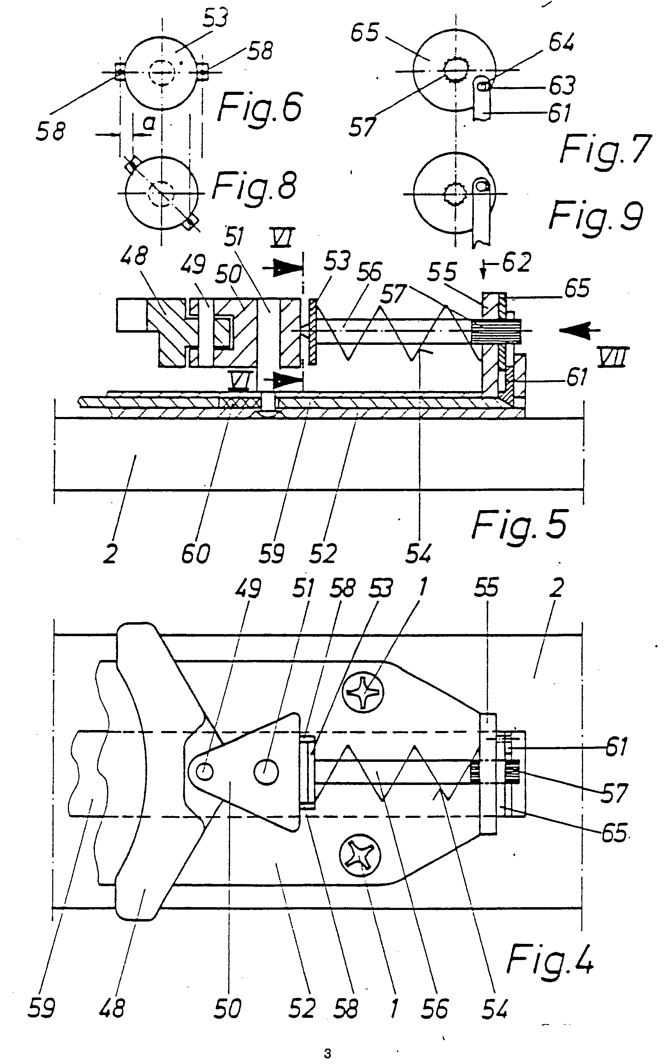

A third embodiment of a front piece according to the invention is shown in Figures 4 to 9. A centrally located sole holder 48 is linked via an axis pin 49 to a sole holder support member 50. The sole holder support member 50 is, in turn, pivotally mounted on a vertical axle 51. The axis 51 is, in turn, riveted to a base plate 52, and base plate 52 is screwed by means of screws 1 onto a ski 2. The sole holder 48 may be secured in its normal position with respect to the sole holder support member by means of a centering spring not shown. The sole holder support member is under the influence of a pressure member 53. The pressure member 53 is under the load of a coil pressure spring 54 and keeps the sole holder support member 50 in its normal position.

Spring 54 abuts against a vertical cross wall 55, a cross wall which is fixedly connected with the base plate or which is formed as a single piece together with the base plate. The cross wall 55 is arranged on a shaft 56 of the pressure member 53. The shaft 56 is rotatably and axially movably mounted in a bore of the cross wall 55. The end of the shaft 56 is provided with teeth 57. The pressure member 53 is provided at its side opposite to the spring 54 with two teeth 58 which are arranged diametrically opposed to each other. The tips of teeth 58 serve as pressure transfer points and normally center the sole holder support member 50 symmetrically with respect to the vertical longitudinal plane of the front piece.

Again, for this embodiment of the invention, as was true for the embodiments described above, a pedal which is not shown is provided. This pedal again is movably mounted on the base plate 52 in a vertically limited manner and it cooperates by means of a push wedge with a slide element 59. Again slide element 59 is movably mounted in the base plate in the longitudinal direction of the front piece. The slide element 59 comprises an elongated hole. The axis 51 extends (see Figure 5), through the elongated hole and a reset spring, for instance a rubber spring 60, is received in the elongated hole ; reset spring 60 abuts axle 51. As is shown in Figures 4 and 5 the right-hand end of the slide member 59 cooperates with the vertically movable stem 61 which is mounted in the cross wall 55. Stem 61 is also under the influence of a reset spring which is not shown in Figure 9 and which is represented by the arrow 62. Stem 61 is provided at its free end with an elongated hole 63 extending transversly with respect to the direction of movement. A crank pin 64 is in engagement with elongated hole 63. Crank pin 64 is provided at a rotary disc 65. The rotary disc 65 is arranged on the toothed end of the shaft 56. The rotary disc 65 is provided for this purpose with a hole having corresponding meshing teeth. Consequently, the shaft 56 is not rotatable with respect to the rotary disc 65, but axially movable. The rotary disc 65 is secured against axial movement by means of stem 61.

As is true for the embodiments described above, for the present embodiment an increase in the ball-of-the-foot load causes, via the pedal, a movement of the slide element 59 towards the right-hand side looking at Figures 4 and 5. The slide element 59 moves the stem 61 upwardly during such movement as a consequence of which movement the rotary disc 65 is moved from its position shown in Figure 7 to its position shown in Figure 9. Simultaneously, this movement causes a rotary movement of the shaft and, consequently, of the pressure member 53 from the position of Figure 6 to the position of Figure 8.

Therefore, the distance of the pressure transfer points of the pressure member 53 with respect to the vertical longitudinal plane is reduced by the amount « a ». This distance is now the arm of the moment due to the force of the spring 54. According to this embodiment of the invention the release resistance of the spring is varied depending on the pressure of the ball of the foot such that for the sideways release of the front piece the total release resistance is in each case approximately the same.

In accordance with another feature of the invention, a control means is provided between the sole holder and the spring, a control means which moves the spring in the above-described sense. The control means is provided such that even in the reverse situation with heavy backward load the friction between the ski boot sole and the sole holder is compensated, a friction which will influence the sideways release. This feature is particularly valuable for a so-called single linkage front piece.

## Claims

1. A front piece for a safety ski-binding comprising a sole holder adapted to support the shoe sole sideways and towards the front, said sole holder being either in the form of a centrally located sole holder (34, 48) or a right and left sole holder (10, 11), so as to pivot sideways against the force of a spring (19, 39, 54) in the event that excessive side forces occur, said front piece further comprising a pedal (26) for actuating a control means adapted to maintain the release resistance at least approximately constant independent of the pressure applied to the pedal, whereby the force of the spring (19, 39, 54) acting

4

upon the sole holder (34) and a sole holder support member (8, 9, 50), respectively, acts with a distance with respect of the pivot axis thereof directly or via a lever linkage (53), characterized in that said distance is adjustable via the control means (24, 26-30 ; 26, 27, 41, 43, 45 ; 59, 61, 65) in such a manner that said distance is reduced with increasing pressure on the pedal (26).

2. The front piece of claim 1, characterized in that two sole holders (10, 11) are provided,

that a spring (19) acts with one of its ends against said sole holders or possibly at support members (8, 9) of said sole holders,

said spring being connected via a guide and support member (20) with a piece member (3, 4, 5) fixedly mounted to the ski,

and that a portion (28, 29) of the control means a portion which is adapted to influence the guide and support member (20), is provided between the guide and support member (20) and the piece member (3, 4, 5) fixedly mounted to the ski, said portion being under the influence of a reset spring (31) which is supported by said piece member fixedly mounted to the ski.

3. The front piece of claim 2, characterized in that the portion (28, 29) of the control means is movably mounted in the central vertical longitudinal plane of the front piece.

4. The front piece of claim 3, characterized in that an adjustment spindle (24) is rotatably but axially non-adjustably supported by said portion (28, 29) of the control means said adjustment spindle (24) being screwed with its thread into a threaded hole of the guide and support member (20).

5. The front piece of claim 1, characterized in that the sole holder (34) which is subjected to detent means with respect to the base plate (36) is provided with a detent groove (37) radially extending with respect to the pivot axis and that a detent member (38) and a detent spring (39) are located in a support (43), said support (43) being movably mounted on the base plate (36) in the central vertical longitudinal plane of the front piece, said movement occurring under the influence of a part (41) of the control means against the force of a reset spring (42).

6. The front piece of claim 5, characterized in that the detent member (38) and the detent spring (39) are held within a spring cage (40) in the support (43), and that the spring cage (40) is adjustably maintained in the support (43) in the direction of movement of the same.

7. The front piece of claim 6, characterized in that a spindle (45) serves for the adjustment of the spring cage (40).

8. The front piece of claim 1, characterized in that the spring (54) acts upon a pressure member (53), said pressure member being rotatably mounted about a horizontally located longitudinal axis lying in the plane of symmetry, and further characterized in that said pressure member (53) is rotatable about its axis under the influence of a part (65) of the control means against the force of a reset spring (arrow 62) in such a manner that the distance of the two pressure transmitting points (58) with respect to the plane of symmetry is reduced (difference a).

9. The front piece of claim 8, characterized in that the pressure member (53) is in the shape of a T, and the shaft (56) is held at the base plate (52) and forms the longitudinal axis, and that a portion (65) of the control means is mounted to the shaft (56) such that it rotates with it, but is longitudinally movable with respect thereto.

10. The front piece of claim 9, characterized in that the spring is a coil pressure spring (54) and is mounted on the shaft (56) of the pressure member.

11. The front piece in particular as set forth in one of the preceding claims having a control means for maintaining the release resistance at least approximately constant independent of the variable pressure applied to the sole holder away from the ski in upward direction, wherein the force of a spring generating the release resistance acts on the sole holder and a sole holder support member, respectively, in a distance with respect to its pivot axis directly or via a lever linkage, characterized in that said distance is adjustable by means of said control means such that said distance is reduced with increasing load on the sole holder in upward direction.

## Patentansprüche

1. Vorderbacken für eine Sicherheits-Skibindung, wobei folgendes vorgesehen ist : ein Sohlenhalter geeignet zur Haltung der Schuhsohle und zwar seitlich und nach vorne hin, wobei der Sohlenhalter entweder in der Form eines mittig angeordneten Sohlenhalters (34, 48) oder eines rechten und linken Sohlenhalters (10, 11) ausgebildet ist, um so seitlich entgegen der Kraft einer Feder (19, 39, 54) im Fall des Auftretens übermäßiger Seitenkräfte zu verschwenken, und ein Pedal (26) zur Betätigung von Steuermitteln geeignet zur Beibehaltung des Auslösewiderstandes mindestens annähernd konstant unabhängig von dem an das Pedal angelegten Druck, wodurch die Kraft der Feder (19, 39, 54) die auf den Sohlenhalter (34) beziehungsweise ein Sohlenhaltertragglied (8, 9, 50) wirkt mit einem Abstand bezüglich der Schwenkachse davon und zwar direkt oder über ein Hebelgelenk (53) wirkt, dadurch gekennzeichnet, daß der Abstand über die Steuermittel (24, 26-30 ; 26, 27, 41, 43, 45 ; 59, 61, 65) in einer Art und Weise wirkt, daß der Abstand mit ansteigendem Druck am Pedal 26 vermindert wird.

2. Vorderbacken nach Anspruch 1, dadurch gekennzeichnet, daß zwei Sohlenhalter (10, 11) vorgesehen sind,

daß eine Feder (19) mit einem ihrer Enden gegen die Sohlenhalter oder möglicherweise an Traggliedern (8, 9) der Sohlenhalter wirkt, daß die Feder über ein Führungs- und Tragglied (20) mit einem Teilglied (3, 4, 5) befestigt am Ski verbunden ist, und

daß ein Teil (28, 29) der Steuermittel, ein Teil der zur Beeinflußung des Führungs- und Tragglieds (20) geeignet ist, zwischen dem Führungs- und dem Tragglied (20) und dem am Ski befestigten Teilglied (3, 4, 5) vorgesehen ist, wobei der Teil unter dem Einfluß einer Rückstellfeder (31) steht, die von dem am Ski befestigten Teilglied getragen ist.

3. Vorderbacken nach Anspruch 2, dadurch gekennzeichnet, daß der Teil (28, 29) der Steuermittel beweglich in der mittigen Vertikallängsebene des Vorderbackens angeordnet ist.

4. Vorderbacken nach Anspruch 3, dadurch gekennzeichnet, daß eine Einstellspindel (24) drehbar aber axial nicht einstellbar durch den Teil (28, 29) der Steuermittel getragen ist, wobei die Einstellspindel (24) mit ihrem Gewinde in eine mit Gewinde versehene Öffnung des Führungs- und Tragglieds (20) eingeschraubt ist.

5. Vorderbacken nach Anspruch 1, dadurch gekennzeichnet, daß der Sohlenhalter (34), der Rastmitteln bezüglich der Basisplatte (36) ausgesetzt ist, mit einer Rastnut (37) versehen ist, die sich radial bezüglich der Schwenkachse erstreckt, und daß ein Rastglied (38) und eine Rastfeder (39) in einem Träger (43) angeordnet sind, der beweglich an der Basisplatte (36) in der mittigen vertikalen Längsebene des Vorderbackens angeordnet ist, wobei die Bewegung unter dem Einfluß eins Teils (41) der Steuermittel entgegen der Kraft einer Rückstellfeder (42) erfolgt.

6. Vorderbacken nach Anspruch 5, dadurch gekennzeichnet, daß das Rastglied (38) und die Rastfeder (39) innerhalb eines Federkäfigs (40) im Träger (43) gehalten sind, und daß der Federkäfig (40) in dem Träger (43) in Richtung der Bewegung desselben einstellbar gehalten ist.

7. Vorderbacken nach Anspruch 6, dadurch gekennzeichnet, daß eine Spindel (45) zur Einstellung des Federkäfigs (40) dient.

8. Vorderbacken nach Anspruch 1, dadurch gekennzeichnet, daß die Feder (54) auf ein Druckglied (53) einwirkt, welches drehbar um eine horizontal angeordnete Längsachse in der Symmetrieebene liegend angeordnet ist, und ferner dadurch gekennzeichnet, daß das Druckglied (53) um seine Achse unter dem Einfluß eines Teils (65) der Steuermittel verdrehbar ist, und zwar entgegen der Kraft einer Rückstellfeder (Pfeil 62) in der Weise, daß der Abstand der zwei Druckübertragungspunkte (58) bezüglich der Symmetrieebene vermindert wird (Differenz a).

9. Vorderbacken nach Anspruch 8, dadurch gekennzeichnet, daß das Druckglied (53) in der Form eines T vorliegt, und daß die Welle (56) an der Basisplatte (52) gehalten ist und die Längsachse bildet, und daß ferner ein Teil (65) der Steuermittel an der Welle (56) derart angeordnet ist, daß er sich mit dieser verdreht aber in Längsrichtung diesbezüglich bewegbar ist.

10. Vorderbacken nach Anspruch 9, dadurch gekennzeichnet, daß die Feder eine Schraubendruckfeder (54) ist und zwar angeordnet an der Welle (56) des Druckglieds.

11. Vorderbacken nach einem der vorhergehenden Ansprüche mit Steuermitteln zum Aufrechterhalten des Auslösewiderstandes mindestens annähernd konstant unabhängig von dem variablen an den Sohlenhalter angelegten Druck vom Ski weg in Richtung nach oben, wobei die Kraft einer den Auslösewiderstand erzeugenden Feder auf den Sohlenhalter beziehungsweise ein Sohlenhaltertragglied wirkt, und zwar in einem Abstand bezüglich seiner Schwenkachse direkt oder über ein Hebelgelenk, dadurch gekennzeichnet, daß der Abstand durch die Steuermittel derart einstellbar ist, daß dieser Abstand mit ansteigender Last am Sohlenhalter in Aufwärtsrichtung reduziert wird.

## Revendications

1. Pièce frontale pour une fixation de sécurité de ski comprenant un porte-semelle adapté à supporter la semelle de la chaussure latéralement et vers l'avant, ledit porte-semelle se présentant soit sous la forme d'un porte-semelle situé au centre (34, 48) ou d'un porte-semelle droit et gauche (10, 11), afin de pivoter latéralement contre la force d'un ressort (19, 39, 54) au cas où des forces latérales excessives se produisent, ladite pièce frontale comprenant en outre une pédale (26) pour actionner un moyen de commande adapté à maintenir la résistance de libération au moins approximativement constante indépendamment de la pression appliquée sur la pédale, afin que la force du ressort (19, 39, 54) agissant sur le porte-semelle (34) et un élément de support (8, 9, 50) du porte-semelle, respectivement, agit avec une distance par rapport à l'axe de pivotement de celui-ci directement ou via une liaison à levier (53), caractérisée en ce que ladite distance est réglable via le moyen de commande (24, 26-30 ; 26, 27, 41, 43, 45 ; 59, 61, 65) de telle façon que ladite distance est réduite avec une pression croissante sur la pédale (26).

2. Pièce frontale selon la revendication 1, caractérisée en ce que deux porte-semelles (10, 11) sont prévus,

en ce qu'un ressort (19) agit avec une de ses extrémités contre lesdits porte-semelle ou éventuellement sur les éléments de support (8, 9) desdits porte-semelle,

ledit ressort étant relié via un élément de guidage et de support (20) à une pièce (3, 4, 5) montée de manière fixe sur le ski,

et en ce qu'une portion (28, 29) du moyen de commande, portion qui est adaptée à influencer l'élément de guidage et de support (20), est prévue entre l'élément de guidage et de support (20) et la pièce (3, 4, 5) montée de manière fixe sur le ski, ladite portion étant sous l'influence d'un ressort de rajustement (31) qui est supporté par ladite pièce montée de manière fixe sur le ski.

3. Pièce frontale selon la revendication 2, caractérisée en ce que la portion (28, 29) du moyen de commande est montée de manière mobile dans le plan longitudinal vertical central de la pièce frontale.

4. Pièce frontale selon la revendication 3, caractérisée en ce qu'une tige de réglage (24) est supportée de manière rotative mais non ajustable axialement par ladite portion (28, 29) du moyen de commande, ladite tige de réglage (24) étant vissée par son filet dans un trou taraudé de l'élément de guidage et de support (20).

5. Pièce frontale selon la revendication 1, caractérisée en ce que le porte-semelle (34) qui est soumis au moyen de détente relativement à la plaque d'assise (36) est doté d'une gorge de détente (37) s'étendant radialement par rapport à l'axe de pivotement et en ce qu'un élément de détente (38) et un ressort de détente (39) sont situés dans un support (43), ledit support (43) étant monté de manière mobile sur la plaque d'assise (36) dans le plan longitudinal vertical central de la pièce frontale, ledit déplacement se produisant sous l'influence d'une pièce (41) du moyen de commande contre la force d'un ressort de rajustement (42).

6. Pièce frontale selon la revendication 5, caractérisée en ce que le moyen de détente (38) et le ressort de détente (39) sont maintenus dans une cage de ressort (40) dans le support (43), et en ce que la cage de ressort (40) est maintenue de manière réglable dans le support (43) dans le sens du déplacement de ce dernier.

7. Pièce frontale selon la revendication 6, caractérisée en ce qu'une tige (45) sert pour le réglage de la cage de ressort (40).

8. Pièce frontale selon la revendication 1, caractérisée en ce que le ressort (54) agit sur un élément de pression (53), ledit élément de pression étant monté de manière rotative selon un axe longitudinal situé horizontalement placé dans le plan de symétrie, et caractérisée en outre en ce que ledit élément de pression (53) peut tourner sur son axe sous l'influence d'une pièce (65) du moyen de commande contre la force d'un ressort de rajustement (flèche 62) de telle façon que la distance des deux points de transfert de pression (58) par rapport au plan de symétrie est réduite (différence a).

9. Pièce frontale selon la revendication 8, caractérisée en ce que l'élément de pression (53) se présente sous la forme d'un T, et l'arbre (56) est maintenu à la plaque d'assise (52) et forme l'axe longitudinal, et en ce qu'une portion (65) du moyen de commande est montée sur l'arbre (56) de façon à tourner avec lui, mais est mobile longitudinalement par rapport à celui-ci.

10. Pièce frontale selon la revendication 9, caractérisée en ce que le ressort est un ressort de pression à boudin (54) et est monté sur l'arbre (56) de l'élément de pression.

11. Pièce frontale selon l'une quelconque des revendications précédentes comportant un moyen de commande pour maintenir la résistance de libération au moins approximativement constante indépendamment de la pression variable appliquée sur le porte-semelle loin du ski dans un sens ascendant, dans laquelle la force d'un ressort produisant la résistance de libération agit sur le porte-semelle et un élément de support du porte-semelle, respectivement, à une distance par rapport à son axe de pivotement directement ou via une liaison à levier, caractérisée en ce que ladite distance est réglable au moyen dudit moyen de commande afin que ladite distance soit réduite avec une charge croissante sur le porte-semelle dans un sens ascendant.

Fig. 1

Fig. 2

EP 0 200 774 B1

Fig.3

EP 0 200 774 B1

Fig.6

Fig.7

Fig.8

Fig.9

Fig.5

Fig.4